## Europäisches Patentamt
## European Patent Office
## Office européen des brevets

(19)

(11) Veröffentlichungsnummer: **0 088 919**
**B1**

(12) **EUROPÄISCHE PATENTSCHRIFT**

(45) Veröffentlichungstag der Patentschrift:
14.01.87

(51) Int. Cl.⁴: **A 01 N 25/02**

(21) Anmeldenummer: **83101835.3**

(22) Anmeldetag: **25.02.83**

(54) **Pestizide Pour-on-Formulierungen.**

(30) Priorität: **09.03.82 DE 3208334**

(43) Veröffentlichungstag der Anmeldung:
**21.09.83 Patentblatt 83/38**

(45) Bekanntmachung des Hinweises auf die Patenterteilung:
**14.01.87 Patentblatt 87/3**

(84) Benannte Vertragsstaaten:
**AT BE CH DE FR GB IT LI LU NL SE**

(56) Entgegenhaltungen:
**EP-A-0 000 345**
**EP-A-0 045 424**
**EP-A-0 051 786**
**BE-A-489 839**
**FR-A-2 452 259**
**GB-A-2 052 988**
**GB-A-2 065 475**
**GB-A-2 072 013**
**US-A-3 683 078**
**US-A-4 048 302**

**Die Akte enthält technische Angaben, die nach
dem Eingang der Anmeldung eingereicht wurden
und die nicht in dieser Patentschrift enthalten sind.**

(73) Patentinhaber: **BAYER AG, Konzernverwaltung RP
Patentabteilung, D-5090 Leverkusen 1 Bayerwerk
(DE)**

(72) Erfinder: **Naik, Arundev H., Walter- Flex- Strasse
20, D-5090 Leverkusen 1 (DE)**
Erfinder: **Stendel, Wilhelm, Dr., In den Birken 55,
D-5600 Wuppertal 1 (DE)**
Erfinder: **Voege, Herbert, Dr., Martin- Buber-
Strasse 41, D-5090 Leverkusen 3 (DE)**

LIBER, STOCKHOLM 1987

## Beschreibung

Die Erfindung betrifft die Verwendung wasserhaltiger pestizider Formulierungen im pour-on Verfahren.

Pestizide Pour-On-Formulierungen sind dadurch gekennzeichnet, daß sie den Wirkstoff in einem geeigneten hautverträglichen Lösungsmittel bzw. Lösungsmittelgemisch gegebenenfalls unter Zugabe weiterer Hilfsstoffe gelöst, emulgiert bzw. suspendiert enthalten und mit Hilfe einer geeigneten Vorrichtung (z.B. mit Hilfe eines Meßbechers, einer Sprühflasche oder einer Dosierspritze) auf Haut und/oder Haarkleid des zu behandelnden Tieres gebracht werden können.

In der Veterinärmedizin sind bereits Pour-On-Formulierungen von Insektiziden und Anthelmintika bekannt geworden (siehe dazu Rogoff, W.M. und Kohler, P.H., J.Econ.Ent. 53, 814-817 (1960)). Der Ausdruck "Pour-On-Formulierung" oder "Spot-On-Formulierung" ist dem Fachmann geläufig. Eine solche Formulierung stellt eine flüssige Präparation dar, die für die sogenannte "Pour-On-Applikation" geeignet ist und auf die Haut aufgegossen wird (Aufguß-Behandlung).

Beispielsweise werden systemische Phosphorsäureester wie Ruelen, Trichlorphon, Fenthion und andere, die eine stark ausgeprägte insektizide Wirkung besitzen, in Form von Pour-On-Formulierungen zur Bekämpfung von Dassellarven angewendet.

Bisher konnte jedoch eine Zeckenbekämpfung nach dieser Methode nicht mit dem notwendigen Erfolg durchgeführt werden. Solche Pour-On-Formulierungen zeigten zwar eine gewisse, aber bei weitem nicht ausreichende Wirkung. Die Zeckenbekämpfung wird daher nach wie vor auf herkömmliche Weise durch Tauch-Bäder oder durch Besprühen mit wäßrigen Wirkstoff-Emulsionen bzw. Suspensionen durchgeführt.

Es wurde bereits gefunden, daß Pour-On-Formulierungen gegen Zecken wirksam sein können, wenn diese mit organischen Lösungsmitteln und spreitenden Ölen formuliert werden. (EP-OS 45 424).

Aus EP-OS 51 786 sind Formulierungen zur Bekämpfung von Ektoparasiten bei Tieren bekannt, die eine verzögerte Freigabe der Wirkstoffe dadurch bewirken, daß sie Polymere enthalten. Diese Formulierungen können jedoch nicht im Pour-On-Verfahren angewandt werden.

Aus GB-P 2 072 013 sind Formulierungen zur Bekämpfung von Kopfläusen bei Menschen bekannt. Diese Formulierungen werden auf das Haar aufgetragen und eingerieben. Es konnte nicht erwartet werden, daß sie auch im pour-on Verfahren bei dem sie auf dem Haarkleid des Tieres nicht verteilt werden, sondern nur auf einer begrenzten Fläche aufgebracht werden, eingesetzt werden können.

Aus EP-OS 345 waren wasserhaltige Formulierungen bestimmter Pyrethroide bekannt. Es konnte jedoch nicht erwartet werden, daß sich solche wasserhaltigen Formulierungen im pour-on Verfahren einsetzen lassen, da das Haarkleid der Tiere fetthaltig und somit wasserabstoßend ist.

Übliche Pour-on-Formulierungen unter Verwendung von DMSO oder DMF als Lösungsmittel, die für das Eindringen des Wirkstoffs in die Haut sorgen, waren schon bekannt. Diese Lösungsmittel wirken zum Teil stark hautreizend. Es war nicht zu erwarten, daß sie durch Wasser ersetzt werden können.

Es war außerdem bekannt, übliche Emulsionskonzentrate mit Wasser auf die gewünschte Konzentration zu verdünnen. Dabei entstehen Lösungen, die rasch eingesetzt werden müssen, da sie nicht lagerstabil sind (US-P 3 683 078, BE-P 489 839, FR-P 2 452 249).

Überraschenderweise lassen sich wasserhaltige Formulierungen im pour-on Verfahren einsetzen, und können dann sogar besser wirksam sein als die bisher beschriebenen Pour-On-Formulierungen auf öliger Basis.

Gegenstand der Erfindung ist demnach die Verwendung wasserhaltiger pestizider Formulierungen im pour-on Verfahren zur Bekämpfung von tierischen Ektoparasiten und/oder Lästlingen, dadurch gekennzeichnet, daß die Formulierungen aus 0,05 - 30 Gew.-Teilen eines Pyrethroids, 0,5 - 90 Gew.-Teilen eines oberflächenaktiven Mittels aus der Gruppe bestehend aus Alkylarylpolyglykolether, Alkylpolyglykolether und/oder ethoxyliertes Nonylphenol, 5 - 99 Gew.-Teilen Wasser und bis zu 70 Gew.-Teilen eines mit Wasser mischbaren Lösungsmittels und gegebenenfalls bis zu 5 Gew.-Teilen an weiteren Hilfsmitteln besteht.

Bevorzugt werden pestizide Formulierungen verwendet, die aus 0,1 bis 10 Gew.-Teilen eines pestiziden Wirkstoffes, 1 bis 30 Gew.-Teilen eines oberflächenaktiven Mittels, 20 bis 70 Gew.-Teilen eines mit Wasser mischbaren Lösungsmittels, 5 bis 50 Gew.-Teilen Wasser und gegebenenfalls bis zu 5 Gew.-Teilen an Hilfmitteln bestehen.

Besonders geeignet zur Bekämpfung von Schädlingen und Lästlingen sind solche pestiziden Formulierungen, die ein nichtionisches, wasserlösliches, oberflächenaktives Mittel aus der oben angegebenen Gruppe enthalten, das einen HLB-Wert (hydrophilic/lipophilic balance) größer als 10 aufweist.

Die erfindungsgemäß verwendbaren Pour-on-Formulierungen sind preiswert und einfach herzustellen.

Man kann sie beliebig mit Wasser oder wassermischbaren Lösungsmitteln verdünnen, z.B. um das Dosis/Volumen/ Körperoberfläche-Verhältnis oder andere Eigenschaften zu variieren.

Die erfindungsgemäß verwendbaren pestiziden Formulierungen können Hilfsmittel wie Konservierungsmittel, Antioxidantien, Stabilisatoren, Farbstoffe, Entschäumungsmittel, Kleber und/oder Synergisten enthalten.

Insbesondere eigenen sich die erfindungsgemäß verwendbaren pestiziden Formulierungen für folgende Wirkstoffe:

Pyrethroide z.B.:

3-[2-(4-Chlorphenyl)-2-chlorvinyl]-2,2-dimethyl-cyclopropancarbonsäure (α -cyano-4-fluor-3-phenoxy)-benzylester (Flumethrin)

α-Cyano-3-phenoxybenzyl( ± )-cis,trans-3-(2,2-dibrom-vinyl)-2,2-dimethylcyclopropancarboxylat

2,2-Dimethyl-3-(2,2-dichlorvinyl)-cyclopropancarbon -säure-(α-cyano-3-phenoxy)-benzylester

3-Phenoxybenzyl( ± )-cis,trans-3-(2,2-dichlorvinyl)-2,2-dimethylcyclopropancarboxylat

α-(p-Cl-phenyl)-isovaleriansäure-α-cyano-3-phenoxybenzylester

[Cyano-(3-phenoxyphenyl)-methyl]-3,3-spiro-[cyclo-propan-1,1-(1H)-inden]-2-carboxylat

5-Benzyl-3-furylmethyl( ± )-cis,trans-chrysanthemat

2-Methyl-4-oxo-3-(penta-2,4-dien-1-yl)-cyclopent-2-en-1-yl-chrysanthemat, Pyrethrin II, Cinerin I und II sowie Jasmolin I und II

Cyano-(4-fluor-3-phenoxyphenol)-methyl-3-2,2-dichlor -ethenyl)-2,2-dimethyl-cyclopropancarboxylat

Pentafluorphenyl-methyl-3-(2,2-dichlorethenyl)-2,2-dime -thylcyclopropancarboxylat und weitere literaturbekannte Pyrethroide (z.B. solche, die in der Europäischen Patentanmeldung Nr. 345 beschrieben werden).

Bevorzugte erfindungsgemäße, oberflächenaktive Mittel sind nicht-ionische, wasserlösliche Emulgatoren mit einem HLB (hydrophilic/lipophilic balance-Wert) größer als 10.

Emulvin W® (Bayer AG), Alkylarylpolyglykolether; Emulgator NP 10® (Bayer AG), Alkylarylpolyglykolether; Emulgator SZZ 14® (Bayer AG), Alkylarylpolyglykolether; Emulgator SZZ 1166 B® (Bayer AG), Alkylarylpolyglykolether; Emulgator SZZ 1166 C® (Bayer AG), Alkylarylpolyglykolether; Renex 678® (Atlas Chemical Industries), Polyoxyethylenalkylarylether; Tween 40® (Atlas), Polyoxyethylensorbitanmonopalmitat; Myrj 53® (Atlas), Polyoxyethylenstearat; Atlas G 3707®, Polyoxyethylenlaurylether; Atlas G 3920®, Polyoxyethylene oleylether; Atlas G 9046 T®, Polyoxyethylenmannitanmonolaurat; Emulgator 1371 B® (Bayer AG), Alkylpolyglykolether; Emulgator 1736® (Bayer AG), Alkylpolyglykolether (Oleylpolyglykolether); Emulgator OX® (Bayer AG), Alkylpolyglykolether ((Dodecylpolyglykolether); Ninox BM-2® (Stepan Chemical Co.), Ethoxyliertes Nonylphenol; Triton X-100® (Rohm and Haas Co.), Isooctylphenolpolyethoxyethanol; Cremophor EL®.

Die im folgenden genannten wassermischbaren Lösungsmittel eignen sich bevorzugt zur Herstellung der erfindungsgemäß verwendbaren Formulierungen:

Methanol, Ethanol, Propanol, besonders bevorzugt Isopropanol, Dimethylsulfoxid, Dimethylformamid, Glycerine, Ethylenglykolmonomethylether, Ethylenglykolmonomethyletheracetat (Methylcellosolvacetat), Ethylenglykolmonoethylether, Diethylglykol, Diethylenglykolmonomethylether (Methoxyethoxyethanol, Methyl carbitol), Diethylenglykolmonoethylether (Ethyldiglykol, Carbitol) Diethylenglykolmonoethyletheracetat, Diethylenglykoldimethylether, Diethylenglykoldiethylether (Diethylcarbitol) Polyethylenglykole, Propylenglykole, Polypropylenglykole sowie Ketone wie Aceton und Methylethylketon.

Formulierungen

Die erfindungsgemäß verwendbaren Formulierungen werden hergestellt durch Lösen des Wirkstoffs in einem Emulgator oder in einem Emulgator-Lösungsmittelgemisch unter Erwärmung, falls notwendig, und durch Zugabe des erforderlichen Anteils Wasser unter Rühren. Eine besondere Homogenisierungsvorrichtung ist nicht erforderlich.

Folgende Beispiele der erfindungsgemäß verwendbaren Formulierungen sollen die Erfindung verdeutlichen, aber nicht einengen:

**Beispiel 1**

Wirkstoff: 3-[2-(4-Chlorphenyl)-2-chlorvinyl]-2,2-dimethylcyclopropancarbonsäure-(α-cyano-4-fluor-3-phenoxy)-benzyl-ester 0,5 g
Netzmittel: Emulvin W® (Alkylarylpolyglykolether) 3,0 g
Wasser: ad 100 ml

**Beispiel 2**

Wirkstoff: wie Beispiel 1 2,5 g
Netzmittel: wie Beispiel 1 15,0 g
Lösungsmittel: Polyethylenglykol (Mol.Gew.200) 15,0 g
Wasser: ad 100 ml

**Beispiel 3**

Wirkstoff: wie Beispiel 1 1,0 g
Netzmittel: NP 10® (Alkylarylpolyglylolether) 20,0 g
Wasser: ad 100 ml

**Beispiel 4**

Wirkstoff: wie Beispiel 1 5,0 g
Netzmittel: Emulgator SZZ 14® 20,0 g
Lösungsmittel: Isopropanol ad 100 ml
Wasser: 5,0 g

### Beispiel 5

Wirkstoff: Pentafluorphenyl-methyl-3(2,2-dichlorethenyl)-2,2-dimethyl-cyclopropancarboxylat 0,5 g
Lösungsmittel: Polyethylenglykol (Mol-Gew. 400) 20,0 g
Emulgator: Emulvin W® (Alkylarylpolyglykolether) 12,5 g
Hilfsmittel: Xanthan Gummi 0,5 g Benzylalkohol 2,0 g
Wasser: ad 100 ml

### Beispiel 6

Wirkstoff: Cyano-(4-fluor-3-phenoxyphenyl)-methyl-3-(2,2-dichlorethenyl)-2,2-dimethyl-cyclopropancarboxylat 2,0 g
Emulgator: Emulgator SZZ 1147® (Alkylarylpolyglykolether) 20,0 g
Wasser: 5,0 g
Lösungsmittel: Ethylenglykolmonomethylether ad 100 ml

Die Wirksamkeit der beanspruchten Formulierungen kann durch folgenden Versuch belegt werden:

Rinder werden mit Larven der Zecke Boophilus microplus Biarra Stamm, infiziert. Die Wirksamkeit wird durch Zählen derjenigen Zecken bestimmt, die fertile Eier legen im Vergleich zu einer unbehandelten Gruppe.

Das Ergebnis ist aus nachstehender Tabelle zu ersehen.

| Gruppe | Dosis | Anzahl Zecken pro Rind die fertile Eier ablegen | |
|---|---|---|---|
| | | -2 bis 0 Tage | 0 bis 21 Tage |
| Kontrolle | - | 940 | 3032 |
| Pour-On-Formulierung Beispiel 1 | 1 mg/kg | 1737 | 0 |
| Pour-On-Formulierung Beispiel 2 | 1 mg/kg | 552 | 0 |
| Pour-On-Formulierung Beispiel 4 | 1 mg/kg | 657 | 0 |

Die Tabelle zeigt die Wirksamkeit der erfindungsgemäßen pour-on/spot-on Formulierungen selbst bei einer geringen Dosierung des Wirkstoffs von 1 mg/kg Körpergewicht.

### Patentansprüche

1. Verwendung einer pestiziden Formulierung im pour-on-Verfahren zur Bekämpfung von tierischen Ektoparasiten und/oder Lästlingen, dadurch gekennzeichnet, daß die Formulierung aus 0,05 - 30 Gew.-Teilen eines Pyrethroids, 0,5 - 90 Gew.-Teilen eines oberflächenaktiven Mittels, aus der Gruppe bestehend aus Alkylarylpolyglycolether, Alkylpolyglykolether und/oder ethoxyliertes Nonylphenol, 5 - 99 Gew.-Teilen Wasser und bis zu 70 Gew.-Teilen eines mit Wasser mischbaren Lösungsmittels und gegebenenfalls bis zu 5 Gew.-Teilen an weiteren Hilfsmitteln besteht.

2. Verwendung einer pestiziden Formulierung gemäß Anspruch 1, dadurch gekennzeichnet, daß sie aus 0,1 bis 10 Gew.-Teilen eines Pyrethroids, 1 bis 30 Gew.-Teilen eines oberflächenaktiven Mittels aus der Gruppe bestehend aus Alkylarylpolyglykolether, Alkylpolyglykolether und/oder ethoxyliertes Nonylphenol, 5 bis 50 Gew.-Teilen Wasser, 20 bis 70 Gew.-Teilen eines mit Wasser mischbaren Lösungsmittels und gegebenenfalls bis zu 5 Gewichtsteilen an Hilfsmitteln besteht.

3. Verwendung einer pestiziden Formulierung gemäß Anspruch 1 dadurch gekennzeichnet, daß ein Pyrethroid aus der Gruppe 2,2-Dimethyl-3-(2,2-dichlorvinyl)-cy-clopropan-1-carbonsäure-α-cyano-3-phenoxy-4-fluor-benzylester,3-[2-(4-Chlorphenyl)-2-chlorvinyl]-2,2-dimethyl-cyclopropan-1-carbonsäure-α-cyano-3-phe-noxy-4-fluor-benzylester, 2,2-Dimethyl-3-(2,2-di-chlorvinyl-cyclopropan-1-carbonsäure-α-cyano-3-phenoxy-benzylester, 2,2-Dimethyl-3-(2,2-dibromvi-nyl-cyclopropan-1-carbonsäure-α-cyano-3-phenoxy-benzyl-ester enthält.

4. Verwendung einer pestiziden Formulierung gemäß Anspruch 1, dadurch gekennzeichnet, daß sie ein Pyretroid aus der Gruppe 2,2-Dimethyl-3-(2,2-dichlor-vinyl)-cyclopropan-1-carbonsäure-α-cyano-3-phenoxy-4-fluor-benzylester, 3-[2-(4-Chlorphenyl)-2-chlorvinyl]-2,2-dimethyl-cyclopropan-1-carbonsäure-α-cyano-3-phenoxy-4-fluor-benzylester enthält.

## Claims

1. Use of a pesticidal formulation in the pour-on method of combating animal ectoparasites and/or troublesome pests, characterised in that the formulation consists of 0.05 - 30 parts by weight of a pyrethroid, 0.5 - 90 parts by weight of a surface-active agent, from the group consisting of alkylaryl polyglycol ether, alkyl polyglycol ether and/or ethoxylated nonylphenol, 5 - 99 parts by weight of water and up to 70 parts by weight of a water-miscible solvent and, if appropriate, up to 5 parts by weight of other auxiliaries.

2. Use of a pesticidal formulation according to Claim 1, characterised in that it consists of 0.1 to 10 parts by weight of a pyrethroid, 1 to 30 parts by weight of a surface-active agent from the group consisting of alkylaryl polyglycol ether, alkyl polyglycol ether and/or ethoxylated nonylphenol, 5 to 50 parts by weight of water, 20 to 70 parts by weight of a watermiscible solvent and, if appropriate, up to 5 parts by weight of auxiliaries.

3. Use of a pesticidal formulation according to Claim 1, characterised in that contains a pyrethroid from the group comprising 2,2-dimethyl-3-(2,2-dichlorovinyl)-cyclopropane-1-carboxylic acid α-cyano-3-phenoxy-4-fluoro-benzyl ester, 3-[2-(4-chlorophenyl)-2-chlorovinyl]-2,2-dimethyl-cyclopropane-1-carboxylic acid α-cyano-3-phenoxy-4-fluoro-benzyl ester, 2,2-dimethyl-3-(2,2-dichlorovinyl-cyclopropane-1-carboxylic acid α-cyano-3-phenoxy-benzyl ester and 2,2-dimethyl-3-(2,2-dibromovinyl-cyclopropane-1-carboxylic acid α-cyano-3-phenoxybenzyl ester.

4. Use of a pesticidal formulation according to Claim 1, characterised in that it contains a pyrethroid from the group comprising 2,2-dimethyl-3-(2,2-dichlorovinyl)-cyclopropane-1-carboxylic acid α-cyano-3-phenoxy-4-fluoro-benzyl ester and 3-[2-(4-chlorophenyl)-2-chlorovinyl]-2,2-dimethyl-cyclopropane-1-carboxylic acid α-cyano-3-phenoxy-4-fluoro-benzyl ester.

## Revendications

1. Utilisation d'une composition pesticide par le mode opératoire pour-on pour combattre les ectoparasites et/ou autres parasites animaux, caractérisée en ce que la composition est constituée de 0,05 à 30 parties en poids d'un pyréthroïde, 0,5 à 90 parties en poids d'un agent tensioactif du groupe consistant en les éthers de polyglycols d'alkylphénols, les éthers de polyglycols d'alcanols et/ou le nonylphénol éthoxylé, 5 à 99 parties en poids d'eau et jusqu'à 70 parties en poids d'un solvant miscible à l'eau et le cas échéant jusqu'à 5 parties en poids d'autres produits auxiliaires.

2. Utilisation d'une composition pesticide selon la revendication 1, caractérisée en ce qu'elle est constituée de 0,1 à 10 parties en poids d'un pyréthroïde, 1 à 30 parties en poids d'un agent tensioactif du groupe consistant en les éthers de polyglycols d'alkylphénols, les éthers de polyglycols d'alcanols et/ou le nonylphénol éthoxylé, 5 à 50 parties en poids d'eau, 20 à 70 parties en poids d'un solvant non miscible à l'eau et le cas échéant jusqu'à 5 parties en poids de produits auxiliaires.

3. Utilisation d'une composition pesticide selon la revendication 1, caractérisée en ce qu'elle contient un pyréthroïde du groupe consistant en le 2,2-diméthyl-3-(2,2-dichlorovinyl)-cyclopropane-1-carboxylate d'alpha-cyano-3-phénoxy-4-fluoro-benzyle, le 3-[2-(4-chlorophényl)-2-chlorovinyl]-2,2-diméthylcyclopropane-1-carboxylate d'alpha-cyano-3-phénoxy-4-fluoro-benzyle, le 2,2-dimé-thyl-3-(2,2-dichlorovinyl)-cyclopropane-1-carboxylate d'alpha-cyano-3-phénoxy-benzyle, le 2,2-diméthyl-3-(2,2-dibromovinyl)-cyclopropane-1-carboxylate d'alpha-cyano-3-phénoxy-benzyle.

4. Utilisation d'une composition pesticide selon la revendication 1, caractérisée en ce qu'elle contient un pyréthroïde du groupe formé par le 2,2-diméthyl-3-(2,2-dichlorovinyl)-cyclopropane-1-carboxylate d'alpha-cyano-3-phénoxy-4-fluoro-benzyle, le 3-[2-(4-chlorophényl)-2-chlorovinyl]-2,2-diméthylcyclopropane-1-carboxylate d'alpha-cyano-3-phénoxy-4-fluoro-benzyle.